# EUROPEAN PATENT SPECIFICATION

(11) **EP 1 237 406 B1**
(45) Date of publication and mention of the grant of the patent: **13.10.2004**
(21) Application number: 00985083.5
(22) Date of filing: 23.11.2000
(51) Int. Cl.: A01N 1/00

(54) **LIQUID OR SEMIFLUID SELF SUSTAINING MULCH FOR PROTECTING CROPS**
FLÜSSIGES ODER HALBFLÜSSIGES SELBSTTRAGENDES-MULCH ZUM SCHUTZ VON GETREIDE
PAILLIS LIQUIDE OU SEMI-FLUIDE AUTOENTRETENU DESTINE A PROTEGER LES CULTURES

(30) Priority: 29.11.1999 US 450016
(43) Date of publication of application: 11.09.2002
(73) Proprietor: Agroqualita' S.r.l., 20123 Milano (IT)
(72) Inventor: BARGIACCHI, Enrica, I-57012 Castiglioncello (IT); CHIELLINI, Emo, I-56127 Pisa (IT); CINELLI, Patrizia, I-50127 Firenze (IT); CORTI, Andrea, I-56124 Pisa (IT); MAGNI, Simone, I-56124 Pisa (IT); MIELE, Sergio, I-56123 Pisa (IT)
(74) Representative: Modiano, Guido, Dr.-Ing.
(86) International application number: PCT/EP2000/011676
(87) International publication number: WO 2001/039593

(56) References cited:
- DE-A- 1 642 325
- US-A- 3 218 149
- US-A- 3 812 615
- US-A- 3 881 278
- US-A- 4 297 810

## Description

The present invention relates to a liquid or semifluid self sustaining mulch for protecting crops. Specifically, the present invention is directed toward a self sustaining mulch in the form of a water-based mixture to be spread on soil for protecting crops against weeds.

### Background Art

The huge world production of plastics from petroleum-based raw materials has generated a big environmental concern. Especially, the common packaging plastics, such as poly(ethylene) (PE), poly(propylene) (PP), poly(styrene) (PS), poly(vinylchloride) (PVC), and poly(ethylene terephthalate) (PET) are accumulating in the environment due to their well-established resistance to environmental degradation.

The use of plastic films in mulching is the largest single application of plastics in agriculture.

Mulch controls radiation, soil temperature and humidity, weed growth, insect infestation, soil compaction, and the degree of carbon dioxide retention.

Low density poly(ethylene), poly(vinyl chloride), poly(butylene), and copolymers of ethylene with vinyl acetate are generally used for mulching.

In the European Community legislation 91/156/CEE on waste, 91/689/CEE on dangerous waste and 94/62/CEE on waste from packaging applications classify waste depending on their origin and their potential danger. This new classification introduced "special waste", a new waste type; waste deriving from agricultural and agrochemical activities has been placed in this category.

Since research aims to develop polymers for applications where they offer unique advantages over the competitive alternative, interest for plastics used in agriculture, especially for mulching films is growing, as costs may be reduced by using degradable polymers, thus avoiding the current collection and recycling of products.

The use of a sprayed mulch would eliminate the complicated procedures for applying plastic films which require appropriate mulching equipment and procedures. In applying the plastic mulch the edge of the mulch must be buried in the soil to hold the mulch in place; this procedure requires time and waste of film material. When the crop is collected the residues of plastic sheets and film may interfere with the new crop growth and need to be removed from the fields and transported to the appropriate landfill. This step may be complicated by film deterioration and contamination from soil and chemicals.

WO 98/01510 discloses a method for applying liquid plastic polymers to soil surface in order to form a continuous membrane film. The application of the formulations of synthetic polymers was effected in at least two coats after smoothing and saturating the soil surface.

WO 96/09355 discloses a covering material for agricultural soil, which contains starch as a binder together with a structure improving amount of an acid and/or an oil and a finely divided vegetable filler. The oil was palm oil or linseed oil and the acid was preferably phosphoric or citric acid.

EP 0.177.226 discloses a liquid mulch which comprises an aqueous composition of a polymeric binder and for 100 parts by weight of the binder 100 to 1600 parts by weight of a particulate filler. The aqueous composition had a solid level of not less than 30 percent by weight and the binder was a latex of a rubbery polymer.

### Disclosure of the Invention

With the foregoing and other objects in view, there is provided, in accordance with a first aspect of the present invention, a sprayable self sustaining mulch for protecting crops as defined in claim 1.

Advantageously, the mulch of the invention is in the form of a sprayable liquid or semifluid aqueous mixture.

The term sprayable means that the mulch is in a fluid form which is useful for spray means.

The useful synthetic polymer binder consists of PVA of every hydrolysis degree and molecular weight, with preference for 88% hydrolysis degree and low molecular weight.

In accordance with an embodiment of the present invention also scraps from PVA film production can be used after drying and grinding.

Diluted water solution of PVA refers to any percentage of PVA, though a 5-25% by weight water solution is preferable, being easily sprayed.

The use of PVA in the present invention has the purpose to add the binder and film forming properties of PVA with the positive effect on maintaining soil structure that this polymer presents.

In accordance with another aspect of the present invention, a method for protecting crops as defined in claim 8.

The fillers are selected from the group consisting of starch, derivative of starch, fraction of starch and mixtures thereof as well as wheat flour, wheat middlings, wheat straw, saw dust, rice flour, corn flour, starch, ground sugarcane bagasse, rice straw, hemp, kraft lignin, and mixtures thereof.

According to another embodiment of the present invention, the mulch also comprises a nitrogen releaser agent, preferably of the type selected from the group consisting of urea, urea-formaldehyde resin, polyaspartates, polyaspartic acid and mixtures thereof.

In accordance with a further embodiment of the present invention, the self sustaining mulch further comprises from 0.5 to 20% by weight of a dispersing agent conveniently selected from the group consisting of vegetable oil, vegetable rubber latex and mixtures thereof.

In the self sustaining mulch of the present invention a sprayable agronomically active ingredient can also be added. With this term is meant any agronomically active ingredient which is useful in agronomic cultures such as fertilizers, pesticides, fungicides, herbicides, pigments, colored fillers and mixtures thereof.

The method of the present invention raises soil temperature and can also be used to confer a color to the soil by the introduction of the appropriate pigments such as carbon black or brownish natural organic fillers such as bagasse.

When the formulations according to the invention are applied they form a crust with the soil, which is able to withstand weather conditions and whose durability can be turned by the amount and the composition of the applied mixtures.

The field can be subjected to a plurality of treatments in the time, and all the ingredients of the mixtures will be selected among non toxic and preferably agronomically useful components.

A single application is preferable for applying the mixture since it is time and cost saving, anyway for a higher covering of the soil surface the application may be repeated several times.

Surfactants and oils can also be added in the formulation to confer a better dispersion of the fillers and simplify spraying procedure. A latex material may be added to improve PVA/fillers adhesion and water resistance of the mulch.

Amongst natural latex, the use of a rubber latex is preferable but also a synthetic biodegradable latex can be added.

The latex is added in an amount preferably of 1-15%, especially 1-10% by weight, with respect to the dry weight of the mixture components.

The water suspensions can also contain other constituents such as light absorbent substances, fungicides, herbicides, fertilizer, pigments etc.

Other suitable additives are oils and surfactants which can improve the spraying procedure, and PVA plasticizers or cross-linkers such as polyaspartic acid, urea, urea-formaldehyde resins etc.

Advantageously, all constituents of the mixture are selected among biodegradable and agronomically compatible materials.

For semi-dry mulch the filler particle size is preferably larger than 1 mm and smaller than 5 cm. For liquid mulch a filler particle size smaller than 300 µm is preferable.

The target soil is any soil in which crops may be cultivated in fields, trays or pots outdoor or in greenhouses. A smooth soil is preferred for the application of the water suspension but any soil or artificial medium for plant growing is suitable to be conditioned. Any pouring, atomizing or spraying installation can be used for applying the mulch according to the invention and common or special nozzle types can be used for the different formulations. Since the mulch of the invention enhances crop production, it is valuable to the agricultural and horticultural industry, and to protect erosion-prone media.

### Ways of carrying out the Invention

The applied mixtures form a crust with the soil and/or a layer over it, through which seeds can emerge and later grow on the mulch. The layer formed on the soil can serve to increase soil temperature, confer a color to the soil, maintain soil structure, prevent erosion, reduce evaporation and fasten plants growth. The present invention demonstrated to be effective in reducing soil erosion due to wind and water.

Fertilizers, herbicides, dyes as carbon black or other dyes and other chemicals can be introduced in the water suspension and sprayed together with it.

Herbicides and fertilizers can be applied also after the application of the mulch. The dry mixture can be suspended in water at room temperature or with a moderate heating at about 50-70°C. This procedure allows the addition of chemicals which may not be used in films processed from the melt. The layer formed on the soil is porous and allows postplant irrigation and fertilization. The protective crust formed on the soil is friable and is readily broken by mechanical action.

The water suspension can be applied both to dry or wet soil. Seeds and seedling plants may be planted before or after the application of the formulations according to the invention.

The amount of mixture applied can be varied in consideration of the desired time of permanence on soil and the desired effect.

The mulch of the invention penetrates in the upper layer of the soil and forms a consistent crust with it.

The following experiments are given by way of illustration of the present invention and not by way of limitation.

### Example 1.

A 10 % and 15 % by weight water suspension mainly composed by 100 parts of PVA, 200 parts of wheat flour (or sugar cane bagasse) and 50 parts of urea or 100 parts of PVA, 200 parts of wheat flour (or sugar cane bagasse), 100 parts of urea were prepared by mixing the dry ingredients and then introducing the formulation in water and stirring for about 30min. Water suspensions were sprayed directly on the soil in an amount corresponding to 100g for square meter. The mixtures were prepared both with PVA Mowiol® 04/88 and 05/88, 88% hydrolysis degree, and respectively 31KD, 37KD and PVA Mowiol® 08/88, 88% hydrolysis degree and 67KD and PVA Hydrolene® K80, scraps from packaging films production, for Mowiol® 08/88 and Hydrolene® K80 the water suspension was heated at about 70°C. The parameters monitored were: the quality of the film formed, time of permanence after weathering and stabilizing action on the soil. Formulations containing sugar cane bagasse conferred a marked brown color to the soil, in formulation of PVA and wheat flour the addition of the appropriate amount of carbon black conferred a dark color to the soil.

Formulation with PVA, chemicals and the organic fillers lasted on the soil for a longer time than what revealed for pure PVA and chemicals showing an improved stabilizing and structuring effect due to the PVA-filler interactions. 70g of a 20% by weight mixture of 100 parts of PVA Mowiol® 08/88, 100 parts of wheat flour, 50 parts of urea was applied in 24 cm diameter pots after seeding 40 lettuce seeds, the test was run in duplicate. Only 8% of the seeds germinated in the conditioned pots, 70% of seeds germinated in the control pots. Even weed growth was strongly limited in the conditioned pots compared with the control. The same amount of mixture applied in the pots after transplanting seedling lettuce or mixed with the soil before transplanting of seedling lettuce improved lettuce growth. The mixtures presented an effect of inhibition on seeds emergence which is effective in reducing weed growth, and a positive effect on the growth of transplanted seedling plants.

### Example 2

10g of wheat flour and 5g of urea were added to 50g of a 10 % by weight PVA solution, 45ml of water and respectively 0.25, 0.5 and 1.0g of rubber latex were added. The resulting mixtures were kept under stirring for 1 h at 70°C. The water suspension was sprayed on the soil in an amount corresponding to 60g of dry matter for 1m² and a flexible covering layer was formed on the soil. The addition of rubber latex in the formulation improved flexibility of the formed layer and adhesion to the soil surface.

### Example 3

A mixture of 40g of poly(acrylic acid) and 40g of sugar cane bagasse was introduced in 200ml of water and heated at 70°C, under stirring for 1 h and then added to a solution of 40g of PVA Hydrolene® K80 in 800 ml of water. The resulting mixture was heated at 70°C and stirred for 1 h. After cooling at room temperature 70g of this mixture were sprayed on the soil surface in a 24 cm pot. A similar mixture was prepared with 40g PVA Hydrolene® K80 and 40g of sugar cane bagasse. When applied on the soil the mixture penetrated of about 0.5cm and dried in about a day forming a uniform dark brown layer on the soil surface. The pots were exposed outdoor for one month. Both formulations helped in maintaining soil structure, in comparison with not conditioned pots, after one month of outdoor exposition. The test was run in quadruplicate.

### Example 4

A dry mixture composed of 10g of powdered PVA Mowiol® 04/88, 5g of urea, 20g of wheat flour was introduced in 200ml of water at 70°C, about 15°C, then 2g of a 50% by weight potassium polyaspartate solution were added and the resulting water suspension was stirred for 20 mm. before applying on the soil. An amount of the mixture corresponding to 70g of dry matter for 1m² was sprayed on the soil. A cohesive crust with the soil was formed and the soil structure after two months of weather exposure was better maintained than in control plots. Soil appeared better aggregated and structured, in control plots soil was completely leveled by the rain action.

### Example 5

A dry mixture composed of 10g of powdered PVA Mowiol® 05/88, 5g of urea, 5g of urea-formaldehyde, 30g of wheat flour was introduced in 280ml of cold water, about 15°C, then 3g of a 50 % by weight potassium polyaspartate solution were added and the resulting water suspension was stirred for 20 mm. before applying on the soil. An amount of the mixture corresponding to 70g of dry matter for 1m² was sprayed on the soil and formed a crust with the soil helping in maintaining soil structure after 3 months of weather exposure.

### Example 6

In this example a test field was prepared and divided in 1.0 x 0.9 m rectangular plots. A randomized block design with three replicates was used. *Zea mays* corn seeds and *Lactuca sativa* seedling plants were selected to test the mulching properties of the prepared formulations. Six *Zea mays* com seeds were planted on one side of each soil parcel; three seedling plants of *Lactuca sativa* were transplanted on the other side in order to reproduce a real plantation environment. Black poly(ethylene) film and wheat straw (1 kg/m²) were used as positive reference materials to quantify the mulching effect of the tested formulations. No conditioned soil was used as control plot.

Two different types of mulching technique were adopted. In the first one, liquid mulch, a dispersion of the organic filler (bagasse or wheat-flour powdered at a size smaller than *0.5* mm) in PVA water solution was applied at low dosage (40 g/m² filter and 20 g/m² of PVA) by directly spraying the suspension on the soil.

In the second method, semi-dry mulching, a large amount (500 g/m²) of organic filler (saw-dust, wheat straw) of large particle size (> 1 mm) was shed on the soil, then the PVA/additives solution was applied to cement the organic fillers. The fluid suspensions were applied after planting the corn seeds and immediately before transplanting of the lettuce plants by spraying with a type E.C. attack OL *195* 23050 Eu RC compressor (Fini Italy), working at 3 bar pressure and equipped with a 2-mm nozzle. The water suspensions were easily sprayed and maintained their composition during the spraying procedure.

Twelve different formulations were prepared by using Hydrolene@ K80 PVA (scraps from PVA films production), four organic fillers (wheat-flour by-product, sugarcane bagasse, wheat straw, and saw-dust) and the two additives (poly aspartic acid and urea-formaldehyde resin) as reported in Table I.

The appropriate amount of 10 % by weight K80 Hydrolene® solution was introduced in a conical flask, then the desired amount of filler, urea-formaldehyde resin or poly(aspartic acid), and water up to a final 10 % by weight concentration were added under stirring. The resulting viscous suspension was kept under stirring for 1 h at 70°C, then water was added to compensate for any evaporation during the heating process. For the semidry mulching a 5 % by weight K80/additives water suspension was prepared with the same method as above. Compositions of the applied mixtures are shown in Table I.

Weather conditions were monitored during the experiment time (100 days) by a meteorological station. Average rain, relative humidity and air temperature are reported in Table II. The field was irrigated when needed. The mulching effect of the applied mixtures was evaluated by monitoring com and lettuce growth and soil structure at the end of the experiment. The results of the experiment are summarized in Table III.

The number of germinated *Zea mays* corn seeds was recorded 10 and 20 days after seeding, the smallest plants were removed and dry weight was recorded; three corn plants were left in each plot. The axial height of the first completely expanded leaf and the diameter at the first inter node of the growing corn plants were measured 35 days after seeding. At the 50th day one corn plant was collected from each plot of the tree block, and dry weight and leaf areas were measured, leaf area index was calculated applying a leaf area coefficient of 0.73. At the 100th day, when the fruits reached the maturity the corn plants left in each parcel were collected and dry weights of stocks and fruits were recorded.

Lettuce plants were collected after 50 days when the plants reached commercial dimensions and their fresh and dry weights were recorded. Liquid and semidry mulch delayed corn seeds emergence for the mechanical action of the polymer-soil crust. In a first time corn growth was slower in the conditioned plots, 20th day.

After 50 days corn plants were more grown in all the conditioned plot compared with the control plot and some plots were comparable with wheat straw and polyethylene. The same result was maintained at the end of the experiment, 100 days, after seeding. Two lettuce plants for each plot of the three blocks were collected 50 days after implanting and fresh and dry weight were recorded.

**Table I.**

| Composition of Mixtures Prepared for the Mulching Experiment | | | | | | |
|---|---|---|---|---|---|---|
| Sample | K80^{a} (g) | Organic Filler | | UF (g) | PAsp (g) | H₂O (g) |
| | | Type | (g) | | | |
| K80SCB | 800 | Bagasse | 160 | - | - | 1400 |
| K80SCBUF | 800 | Bagasse | 160 | - | 12 | 1400 |
| K80SCBPAsp | 800 | Bagasse | 160 | 7.2 | - | 1400 |
| K80WF | 800 | Wheat Flour | 160 | - | - | 1400 |
| K80WFUF | 800 | Wheat Flour | 160 | 7.2 | - | 1400 |
| K80WFPAsp | 800 | Wheat Flour | 160 | - | 12 | 1400 |
| K80WS | 800 | Wheat Straw | 500 | - | - | 800 |
| K80WSUF | 800 | Wheat Straw | 500 | 7.2 | - | 800 |
| K80WSPAsp | 800 | Wheat Straw | 500 | - | 12 | 800 |
| K80SD | 800 | Saw Dust | 500 | - | - | 800 |
| K80SDUF | 800 | Saw Dust | 500 | 7.2 | - | 800 |
| K80SDPAsp | 800 | Saw Dust | 500 | - | 12 | 800 |
| WS | - | Wheat Straw | 1000 | - | - | - |
| PE | - | - | - | - | - | - |

| | | | | | | |
|---|---|---|---|---|---|---|
| ^{**a**} **used as 10% by weight solution of K80 Hydrolene®.** | | | | | | |

**Table II.**

| Weather Conditions Recorded in the Period of the Mulching Experiment. | | | | |
|---|---|---|---|---|
| Month | Period (days) | **RH**^{**a**} (%) | Rain^{b} (mm) | Air Temp.^{d} (°C) |
| June | 1-10 | 73.8 | 31.6 | 26.1 |
| | 11-20 | 66.7 | 24.3 | 24.1 |
| | 21-30 | 67.1 | 3.1 | 22.0 |
| | 1-30 | 69.2 | 59.0 | 22.3 |
| July | 1-10 | 67.2 | 3.9 | 21.8 |
| | 11-20 | 69.5 | 6.5 | 24.2 |
| | 21-31 | 65.5 | 1.5 | 25.6 |
| | 1-31 | 67.4 | 11.9 | 23.9 |
| August | 1-10 | 63.2 | 0.0 | 26.1 |
| | 11-20 | 59.1 | 3.5 | 25.6 |
| | 21-31 | 65.9 | 22.3 | 24.0 |
| | 1-31 | 62.7 | 25.8 | 25.2 |
| September | 1-10 | 70.4 | 0.1 | 24.1 |
| | 11-20 | 66.9 | 93.6 | 21.2 |
| | 21-30 | 64.9 | 0.0 | 20.2 |
| | 1-30 | 67.4 | 93.7 | 21.8 |

| | | | | |
|---|---|---|---|---|
| ^{**a**} **Relative humidity.** | | | | |
| ^{**b**} **Ram collected.** | | | | |
| ^{**d**} **Air temperature.** | | | | |

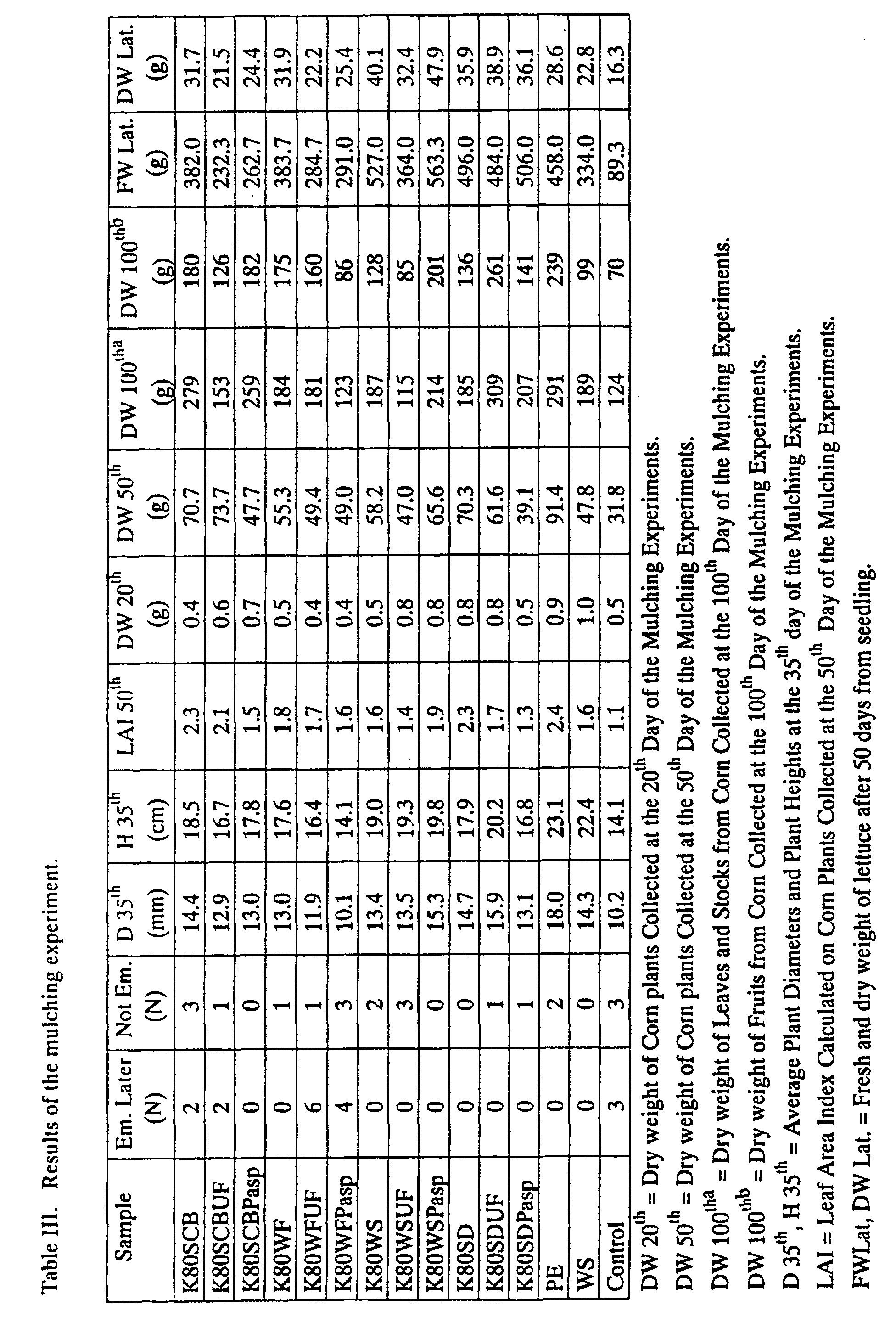

A significant improvement in lettuce growth was detected for both liquid and semi dry mulches compared with the control plots, and crops production was comparable with wheat straw and polyethylene. The crop growth was higher in the plots conditioned with the present invention in comparison with the control plots and was comparable with classic mulching techniques such as wheat straw and polyethylene mulching films. The lettuce plants left in the plots were no more irrigated and stress deriving from want of water was recorded in a higher extent in control plots than in conditioned plots.

During the experiment time the field was exposed to extremely severe wind and rain conditions, especially in the months of June and September, which leveled the soil in the control plots while a good soil structure was maintained in the plots conditioned with both liquid and semi-dry mulch.

This experiment demonstrated that crops production may be enhanced, watering reduced and a better maintaining of soil structure after rain drops impact may be obtained with the application of these mixtures.

The disclosures in U.S. Patent Application No. 09/450,016 from which this application claims priority are incorporated herein by reference.

## Claims

1. A sprayable self sustaining mulch for protecting crops comprising an aqueous based mixture, prepared at room temperature, of a sprayable vegetable filler and a binder, wherein said binder is poly(vinylalcohol) and wherein said filler is selected from the group consisting of starch, derivative of starch, fraction of starch and mixtures thereof as well as wheat flour, wheat middlings, wheat straw, saw dust, rice flour, corn flour, starch, ground sugarcane bagasse, rice straw, hemp, Kraft lignin, and mixtures thereof.

2. The self sustaining mulch according to claim 1, further comprising a nitrogen releaser agent.

3. The self sustaining mulch according to claim 2, wherein said nitrogen releaser agent is selected from the group consisting of urea, urea-formaldehyde resin, polyaspartates, polyaspartic acid and mixtures thereof.

4. The self sustaining mulch according to claim 1, further comprising a poly(vinylalcohol)-plasticizer or cross-linker agent.

5. The self sustaining mulch according to claim 4, wherein said poly(vinylalcohol)-plasticizer or cross-linker agent is selected from the group consisting of urea, urea-formaldehyde resin and polyaspartic acid.

6. The self sustaining mulch according to claim 1, further comprising from 0.5 to 20% by weight of a dispersing agent selected from the group consisting of vegetable oil, vegetable rubber latex and mixtures thereof.

7. The self sustaining mulch according to claim 1, further comprising a sprayable agronomically active ingredient.

8. A method for protecting crops comprising the application to a soil of a self sustaining mulch comprising an aqueous based mixture of a sprayable vegetable filler and a poly(vinylalcohol), wherein said filler is selected from the group consisting of starch, derivative of starch, fraction of starch and mixtures thereof as well as wheat flour, wheat middlings, wheat straw, saw dust, rice flour, corn flour, starch, ground sugarcane bagasse, rice straw, hemp, Kraft lignin, and mixtures thereof, to form a protective layer.

9. The method according to claim 8, wherein the application is made by spray means.

10. The method according to claim 8, wherein the self sustaining mulch is applied in an amount ranging from 50 to 1000 g/m².

11. The method according to claim 8, wherein the self sustaining mulch further comprises a pigment to impart a coloration to a treated surface.

## Patentansprüche

1. Zersprühbarer, selbsterhaltender Abdeckdünger zum Schutz von Nutzpflanzen, der ein Gemisch auf Wasserbasis, hergestellt bei Raumtemperatur, aus einem aufsprühbaren pflanzlichen Füller und einem Bindemittel umfasst, wobei dieses Polyvinylalkohol ist und der Füller ausgewählt wird aus der Gruppe, bestehend aus Stärke, einem Stärkederivat, einer Stärkefraktion und Gemischen davon sowie Weizenmehl, Weizenmittelkorn, Weizenstroh, Sägemehl, Reismehl, Maismehl, Stärke, vermahlener Zuckerrohrbagasse, Reisstroh, Hanf, Kraftlignin und Gemischen davon.

2. Selbsterhaltender Abdeckdünger nach Anspruch 1, der außerdem ein Stickstoff freisetzendes Mittel umfasst.

3. Selbsterhaltender Abdeckdünger nach Anspruch 2, bei dem das Stickstoff freisetzende Mittel ausgewählt wird aus der Gruppe, bestehend aus Harnstoff, Harnstoffformaldehyd-Harz, Polyaspartaten, Polyasparaginsäure und Gemischen davon.

4. Selbsterhaltender Abdeckdünger nach Anspruch 1, der außerdem einen Polyvinylalkohol-Weichmacher oder -Vernetzer umfasst.

5. Selbsterhaltender Abdeckdünger nach Anspruch 4, bei dem der Polyvinylalhokol-Weichmacher oder -Vernetzer ausgewählt wird aus der Gruppe, bestehend aus Harnstoff, Harnstoff-Formaldehyd-Harz und Polyasparaginsäure.

6. Selbsterhaltender Abdeckdünger nach Anspruch 1, der außerdem 0,5 bis 20 Gew.-% eines Dispergators, ausgewählt aus der Gruppe Pflanzenöle, Pflanzengummilatex und Gemische davon, umfasst.

7. Selbsterhaltender Abdeckdünger nach Anspruch 1, der außerdem einen versprühbaren, landwirtschaftlich verwendbaren Wirkstoff umfasst.

8. Verfahren zum Schutz von Nutzpflanzen, das die Aufbringung eines selbsterhaltenden Abdeckdüngers, der ein Gemisch auf Wasserbasis aus einem pflanzlichen Füller und einem Polyvinylalkohol umfasst, wobei der Füller ausgewählt wird aus der Gruppe, bestehend aus Stärke, einem Stärkederivat, einer Stärkefraktion und Gemischen davon sowie Weizenmehl, Weizenmittelkorn, Weizenstroh, Sägemehl, Reismehl, Maismehl, Stärke, vermahlener Zuckerrohrbagasse, Reisstroh, Hanf, Kraftlignin und Gemischen davon, zur Bildung einer Schutzschicht umfasst.

9. Verfahren nach Anspruch 8, bei dem die Aufbringung durch Aufsprühen erfolgt.

10. Verfahren nach Anspruch 8, bei dem der selbsterhaltende Abdeckdünger in einer Menge von 50 bis 1000 g/m² aufgebracht wird.

11. Verfahren nach Anspruch 8, bei dem der selbsterhaltende Abdeckdünger außerdem noch zur Anfärbung einer behandelten Fläche ein Pigment umfasst.

## Revendications

1. Paillis autoentretenu pulvérisable pour protéger des récoltes comprenant un mélange à base aqueuse, préparé à température ambiante, d'une charge végétale pulvérisable et d'un liant, dans lequel ledit liant est du poly(alcool vinylique) et dans lequel ladite charge est choisie dans le groupe constitué de l'amidon, d'un dérivé d'amidon, d'une fraction d'amidon et des mélanges de ceux-ci ainsi que de la farine de blé, du remoulage, de la paille de blé, de la sciure de bois, de la farine de riz, de la farine de maïs, de l'amidon, de la bagasse de canne à sucre broyée, de la paille de riz, du chanvre, de la lignine de Kraft, et des mélanges de ceux-ci.

2. Paillis autoentretenu selon la revendication 1, comprenant en outre un agent de libération de l'azote.

3. Paillis autoentretenu selon la revendication 2, dans lequel ledit agent de libération de l'azote est choisi dans le groupe constitué de l'urée, d'une résine urée-formaldéhyde, des polyaspartates, du polyacide aspartique et des mélanges de ceux-ci.

4. Paillis autoentretenu selon la revendication 1, comprenant en outre un plastifiant ou agent de réticulation poly(alcool vinylique).

5. Paillis autoentretenu selon la revendication 4, dans lequel ledit plastifiant ou agent de réticulation poly(alcool vinylique) est choisi dans le groupe constitué de l'urée, d'une résine urée-formaldéhyde et du polyacide aspartique.

6. Paillis autoentretenu selon la revendication 1, comprenant en outre de 0,5 à 20 % en poids d'un agent dispersant choisi dans le groupe constitué d'une huile végétale, d'un latex de caoutchouc végétal et des mélanges de ceux-ci.

7. Paillis autoentretenu selon la revendication 1, comprenant en outre un ingrédient agronomiquement actif pulvérisable.

8. Procédé de protection de récoltes comprenant l'application à un sol d'un paillis autoentretenu comprenant un mélange à base aqueuse d'une charge végétale pulvérisable et de poly(alcool vinylique), dans laquelle ladite charge est choisie dans le groupe constitué de l'amidon, d'un dérivé d'amidon, d'une fraction d'amidon et des mélanges de ceux-ci ainsi que de la farine de blé, du remoulage, de la paille de blé, de la sciure de bois, de la farine de riz, de la farine de maïs, de l'amidon, de la bagasse de canne à sucre broyée, de la paille de riz, du chanvre, de la lignine de Kraft, et des mélanges de ceux-ci, pour former une couche protectrice.

9. Procédé selon la revendication 8, dans laquelle l'application est effectuée par un moyen de pulvérisation.

10. Procédé selon la revendication 8, dans laquelle le paillis autoentretenu est appliqué en une quantité variant de 50 à 1 000 g/m².

11. Procédé selon la revendication 8, dans laquelle le paillis autoentretenu comprend en outre un pigment pour conférer une coloration à une surface traitée.
